# EUROPEAN PATENT APPLICATION

(11) **EP 4 644 165 A1**
(43) Date of publication of application: **05.11.2025**
(21) Application number: 24173961.4
(22) Date of filing: 02.05.2024
(51) Int. Cl.: B60L 53/302

(54) **CHARGING CABLE COOLED WITH AN AUTOMOTIVE CLIMATE SYSTEM**

(71) Applicant: Aptiv Technologies AG, 8200 Schaffhausen (CH)
(72) Inventor: WOLNY, Jan, 31-315 Krakow (PL); KLIMEK, Wojciech, 31-241 Krakow (PL); PIESZKA-LYSON, Monika, 25b Zygmuntowska (PL); CIESZYNSKI, Michal, 30-612 Krakow (PL); KOZAK, Pawel, 30-707 Krakow (PL)
(74) Representative: INNOV-GROUP

(57) **Abstract**

The disclosure concerns a cable cooling system (3) for cooling an embedded part of a battery charging cable (9) of a battery-operated vehicle, said vehicle comprising an air conditioning system (2) operated with a coolant fluid circuit that is configured for absorbing heat by phase changing expansion, such as a compressor (29) operated air conditioning system.

According to the disclosure, said cable cooling system (3) comprises a cable cooling liquid that is circulated in a closed circuit (41) for absorbing heat from said charging cable (9) and discharging said heat toward said air conditioner coolant fluid (31), through a cable cooling heat-exchanger (311) that is incorporated within said air conditioner coolant fluid circuit (2) so as to be cooled by said air conditioner coolant fluid circuit.

Preferably, cooling liquid is a non-dielectric liquid such as an ethylene-glycol solution, which enables a very efficient cooling with simple and standard components.

## Description

The present disclosure relates to a system for cooling the charging cable of an electric vehicle and its rechargeable battery.

Today, cables for charging electric vehicles mostly do not have specific cooling features, which significantly limits the capacity of the current through them, and thus the speed of charging the battery.

In document US2019061543A1, it has been proposed to have the embedded parts of the charging device to be cooled by a heat exchanger that is integrated within the phase changing circuit of the air conditioner system of the vehicle.

In document US11380460B2, it has been proposed to have the embedded part of this charging cable to be inserted within the internal tube of a heat exchanger, where such internal tube is bathed within a refrigerant fluid that is circulated through a phase changing circuit with evaporator and condenser.

However, such solutions are still cumbering within the vehicle and a source of cost and complexity.

One aim of the invention is to overcome some or all of the disadvantages of the prior art. In particular, it is intended to propose a cooling system for such a charging cable that brings a better compromise between various constraints such as performance, compacity, reliability, and simplicity of manufacturing, installation and adaptation compared to an existing vehicle or vehicle type.

### Summary of the disclosure

These objectives are achieved partially or wholly, according to the disclosure, by a cooling system and method having the features set forth in the claims. The claims form an integral part of the technical instruction provided herein in connection with the disclosure.

In the present disclosure, it must be understood that the term "charging cable" is also intended as encompassing various devices of the embedded circuit that are related and connected to the conductors of this cable, from the charging port to the traction battery, such as the charging port, connection devices and terminals, and/or power transformation devices.

In this context it is disclosed a cooling system according to 1. This device may also optionally include at least one of the features of any one of claims 2 to 8.

The disclosure also relates to a method for cooling such a charging cable, according to claim 9.

Thanks to these provisions, in this way the complexity of the cable heat rejection system is largely reduced, since the climate control systems requires little modification to perform this additional role.

The refrigerant fluid from the cars climate control system is diverted into the cable heat exchanger. In it or before it, it is expanded to achieve a low temperature. In the heat exchanger the fluid evaporates, efficiently cooling the liquid that flows in the charging cable. The refrigerant later is later compressed to a high pressure and condensed in the climate control condenser, preferably through the same compressor and circuit as for the refrigerant used by the cabin evaporator(s).

Multiple embodiments of invention are hereby envisioned, which comprise the optional features here disclosed, according to all of their feasible combinations.

### List of drawings

Other advantages and features will become apparent on examination of the detailed description of three examples that are in no way limitative, and the attached drawings, in which:
- Fig.1 is a schematic representation that illustrates an example of embodiment of the disclosure;
- Fig.2 is a schematic representation that illustrates with more details the cooling liquid circuit of Fig.1 in a first example of embodiment of the disclosure, with two externally insulated tubular different insulated compartments that each bathes one non-insulated conductors.
- Fig.2a is a perspective of a section view of a tubular conductor of the embodiment of Fig.2.
- Fig.3 is a schematic representation that illustrates with more details the cooling liquid circuit of Fig.1 in a second example of embodiment of the disclosure, with two different insulated compartments that each bathes one non-insulated conductors.
- Fig.4 is a schematic representation that illustrates with more details the cooling liquid circuit of Fig.1, in a third example of embodiment of the disclosure, with a single cooling compartment bathing two different insulated conductors.

### Description in reference to the drawings

In the various figures, similar or identical elements have the same references.

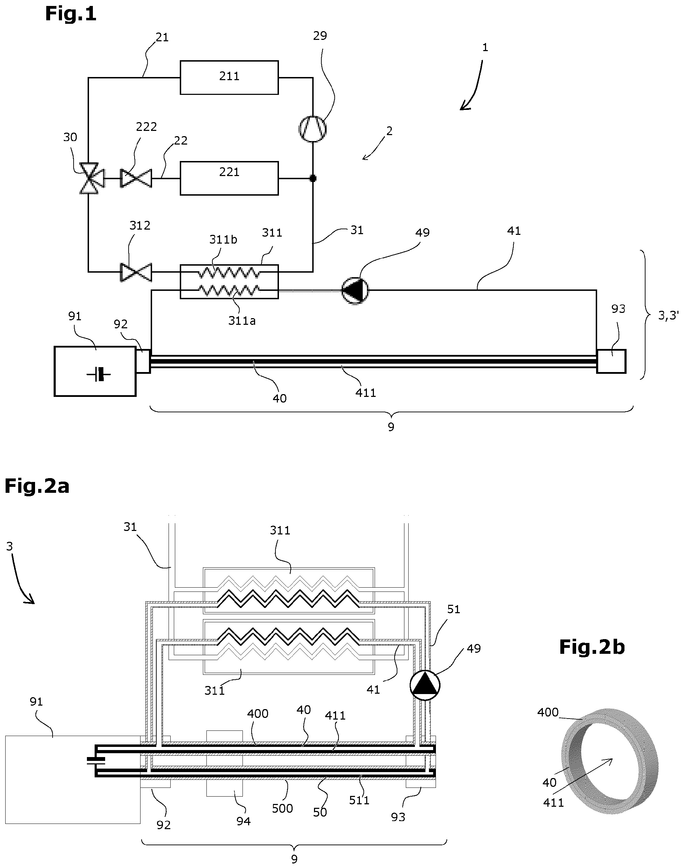

Fig.1 illustrates a global cooling system 1 of a battery-operated vehicle, the battery 91 of which may be charged through a charging cable 9. In this example, this charging cable comprises a connexion box 92 and one or several electrical conductors 40 and a charging port 93 that are operatively connected together for supplying the battery with electrical energy from an external source (non represented) by a charging cord to be plugged into the charging cord 93.

A cable cooling system 3 comprises a cable cooling liquid that is circulated in a closed circuit 41 for absorbing heat from the charging cable 9 and discharging said heat toward said air conditioner coolant fluid 31, through a cable cooling heat-exchanger 311.

Fig.1 illustrates an air conditioning system 2 operated with a coolant fluid circuit that is configured for absorbing heat by phase changing expansion, here with a compressor 29 that raises the pressure of a refrigerant and circulates 31 it towards and through a condenser heat exchanger 211. It has a first cooling branch 22 that incorporates a cabin heat-exchanger 221 arranged down stream of an expansion valve 222 for cooling the interior air of the vehicle. Such air conditioner system 2 is for example of a known type, and possibly a system already built in an existing vehicle. An example of refrigerant fluid is the r1234yf fluid.

In this example, the cable cooling liquid is cooled by circulating through a first circuit 311a of the cable cooling heat-exchanger 311, thanks to a second circuit 311b of said heat-exchanger that is incorporated downstream of a discharge valve 312 within a branch of the vehicle air conditioning system 2, here in a second branch 31 of the air conditioner coolant fluid circuit that is parallel to the first cooling branch 22. A three-ways valve 30 connects the first cooling branch 21 and the second cooling branch 31 to the condenser branch 21, so as to enable selecting as needed to refrigerate one or the other or both of the firs and second cooling branch.

As it can be seen, when compared with a standard known and industrialized air conditioner system, there are only few devices and parts to be added for building a charging cable cooling system according to the disclosure.

The cooling liquid circuit 41 is a non- or moderately pressurized circuit, containing a cooling liquid that preferably needs no phase changing and none or only small pressure differences. Its components 41, 49 therefore need only a quite simple technology, similar to most well-known components for cooling liquid of thermal motors.

The second cooling branch 31 requires only standard ducts and two- and three-ways valves 30 and 312, similar to the well-known basic components of a standard air conditioner system. Even the cable cooling heat exchanger 311 may be derived from a known evaporation heat exchanger such as the cabin evaporator 221, or be built with a similar technology.

Also, compared with a standard cabin air conditioning circuit, the air conditioning circuit 2 disclosed here uses standard technology and mainly standard components, that are potentially easily available in the industry of air-conditioner systems, such as the expansion valve 312 or the three-ways valve 30.

Fig.2 illustrates with more details the cooling liquid circuit of Fig.1 in a first example of embodiment of the disclosure. In this example, there are two different cooling liquid circuits 41 and 51, insulated from each other and from the rest of the vehicle. Both of these circuits 41, 51 are cooled within two first circuits of a same cable cooling heat exchanger 311, while it is also encompassed to have them cooled by two different exchangers. Both circuits 41, 51 are here illustrated as circulated by a same pump 49, while it is encompassed to have two different pumps.

Each conductor 40 respectively 50 is shaped as a metallic tubular conductor, as seen in detail in Fig.2a. Electrically, such tubular conductors are externally insulated by an insulating layer 400 respectively 500. They each define an internal compartment 411, 511, in which is circulated the cooling liquid of their respective circuit 41, 51.

As it is understood, the cooling liquid within such conductors is in direct contact with the metal of the conductor and able to exchange heat on a large area, much larger than if the liquid was surrounding a standard thread-like conductor. Moreover, external insulation is quite easy to provide directly around the external surface of the tube.

The rest of each of the cable cooling circuits 41, 51 is also electrically insulated from its environment, for example by using insulating hoses or conducts. In this example, each of these circuits 41, 51 is cooled in a separated and/or externally insulated part of the heat exchanger 311. In this example, such parts of heat exchanger 311 are connected on two parallel branch of the air conditioner circuit 31, though various other configurations are also encompassed, such as in series. Preferentially the air conditioner cooling fluid of the air conditioner system 2 is an electrically insulator fluid, such as a fluid of r1234yf type. Preferentially, a direct metallic separation is then provided between the two circuit of each heat exchanger part 311, thus with an optimal efficiency, without needing to have an air conditioner cooling circuit 31 to be electrically insulated by itself.

Other components of the charging cable 9, here a battery junction box 92 and the charging port 93 and a power transformation device 94, are also cooled by the cooling liquid circulated in one or both of the cooling liquid circuits 41, 51, directly or through an insulated heat exchange contact surface.

In this exemplary embodiment, it can be seen that it is possible to use a non-dielectric cooling liquid in these cooling liquid circuits 41, 51 - for example a solution of 50% ethylene-glycol, or any known cooling liquid. While it requires to build insulated circuits 41, 51, it also enables a very efficient conduction with the conductors 40, 50 and uses a liquid that more efficient than most dielectric cooling liquid, easier to find, cheaper to buy, and often less harmful for the environment.

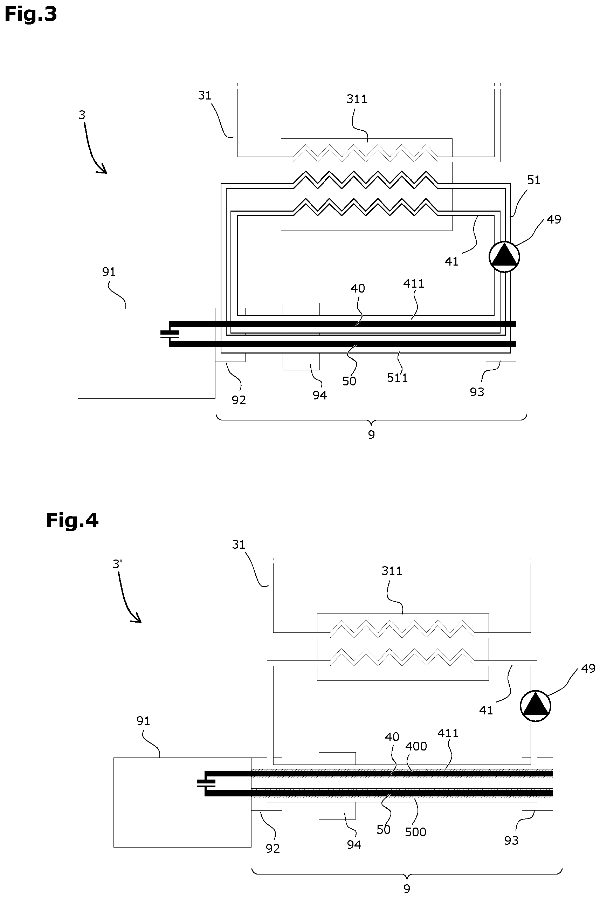

Fig.3 and Fig.4 illustrate with more details the cooling liquid circuit of Fig.1 in variants of the embodiment of Fig.2, and will be described only in their differences.

In the example of Fig.3, two electrical conductors 40 and 50 are each directly bathed by cable cooling liquid in a compartment 411, 511 of a separated charging cable cooling insulated circuit 41, 51.

In the example of Fig.4, two electrical conductors 40 and 50 are each sheathed by an insulator layer 400 and respectively 500, and bathed by the same cooling liquid within a same compartment 411 of the cooling liquid circuit 41.

Of course, the disclosure is not limited to the examples just described, and many adjustments can be made to these examples without departing from the scope of the disclosure.

### References

- 1: global cooling system
- 2: air conditioning system
- 21: condenser branch
- 22: first cooling branch - cabin cooling branch
- 222: expansion valve of cabin branch
- 29: compressor
- 3: cable cooling system
- 30: three-ways valve
- 31: second cooling branch - cable cooling branch
- 311: cable cooling heat exchanger/evaporator
- 311a: first circuit of the cable cooling exchanger - cooling liquid
- 311b: second circuit of the cable cooling exchanger - refrigerant fluid
- 312: expansion valve of the cable cooling branch
- 40, 50: electrical charging conductors of the charging cable
- 400, 500: insulating layers of the conductors
- 41, 51: cable cooling liquid circuits
- 411, 511: conductor compartments of the cable cooling liquid circuits
- 49: circulation pump
- 9: charging cable
- 91: battery to be charged
- 92: connection/junction box
- 93: charging port
- 94: power transformation

## Claims

1. Cable cooling system (3) for cooling an embedded part of a battery charging cable (9) of a battery-operated vehicle, said vehicle comprising an air conditioning system (2) operated with a coolant fluid circuit that is configured for absorbing heat by phase changing expansion, such as a compressor (29) operated air conditioning system,
**characterized in that** said cable cooling system (3) comprises a cable cooling liquid that is circulated in a closed circuit (41) for absorbing heat from said charging cable (9) and discharging said heat toward said air conditioner coolant fluid (31), through a cable cooling heat-exchanger (311) that is incorporated within said air conditioner coolant fluid circuit (2) so as to be cooled by said air conditioner coolant fluid circuit.

2. System (3) according to the preceding claim, **characterized in that** the cable cooling fluid is a liquid-only fluid which is cooled by circulating through a first circuit (311a) of the cable cooling heat-exchanger (311), thanks to a second circuit (311b) of said heat-exchanger that is incorporated within a branch (31) of the vehicle air conditioning system (2), notably downstream of a discharge valve (312).

3. System (3) according to any one of the preceding claims, **characterized in that** the air conditioner coolant fluid circuit has a first cooling branch (22) that incorporates a cabin heat-exchanger (221) arranged for cooling the interior air of the vehicle,
and **in that** the cable cooling heat exchanger (311) is incorporated, downstream of a discharge valve (312), within a second cooling branch (31) of the air conditioner coolant fluid circuit that is parallel to said first cooling branch.

4. System (3) according to any one of the preceding claims, **characterized in that** the cable cooling liquid (41, 51) is a non-dielectric liquid, typically always in liquid phase,
and **in that** it comprises one or several separated conductor cooling circuits (41 respectively 51) that are insulated so as to insulate its cable cooling liquid from electrical contact with outside and from other conductor cooling circuits (51 respectively 41).

5. System (3) according to the preceding claim, **characterized in that** one or several conductors of the charging cable has an internal longitudinal cavity that forms a part of the charging cable cooling circuit in which the cooling liquid circulates in direct contact with said conductor, preferably with a tubular shape, and is electrically insulated on its external surface.

6. System (3) according to any one of claims 4 or 5, **characterized in that** only direct metallic separation is provided between the two circuits within one or each of the cable heat exchanger (311) parts, said part of cable heat exchanger (311) being itself electrically insulated.

7. System (3) according to any one of claims 1 to 4, **characterized in that** it comprises one or several insulated layers (400 respectively 500) that are each closely applied on electrical conductors (40 respectively 50) of one electrical phase of the charging cable (9), so as to insulate said conductor from the cable cooling liquid (411) it is cooled by.

8. System (3) according to the preceding claim, **characterized in that** conductors (40, 50) of different electrical phases of the charging cable (9) are cooled by a common charging cable cooling circuit (41).

9. Method for cooling an embedded part of a battery charging cable (9) of a battery-operated vehicle, said vehicle comprising an air conditioning system (2) operated with a coolant fluid circuit that is configured for absorbing heat by phase changing expansion, such as a compressor (29) operated air conditioning system, said method comprising cooling said charging cable (9) with a cooling system (3) according to any one of the preceding claims.
